(19) Europäisches Patentamt
European Patent Office
Office européen des brevets

(11) **EP 4 674 614 A1**

(12) **EUROPEAN PATENT APPLICATION**

(43) Date of publication:
**07.01.2026 Bulletin 2026/02**

(21) Application number: **24186577.3**

(22) Date of filing: **04.07.2024**

(51) International Patent Classification (IPC):
***B32B 7/02*** *(2019.01)* ***B32B 7/022*** *(2019.01)*
***B32B 7/027*** *(2019.01)* ***B32B 27/08*** *(2006.01)*
***B32B 27/16*** *(2006.01)* ***B32B 27/18*** *(2006.01)*
***B32B 27/32*** *(2006.01)*

(52) Cooperative Patent Classification (CPC):
**B32B 7/02; B32B 7/022; B32B 7/027; B32B 27/08; B32B 27/16; B32B 27/18; B32B 27/20; B32B 27/22; B32B 27/32; B32B 27/327; C08J 5/18;** B32B 2250/02; B32B 2250/03; B32B 2250/04; B32B 2250/05; (Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Borealis GmbH**
**1020 Vienna (AT)**

(72) Inventors:
- **Wang, Jingbo**
  **4021 Linz (AT)**
- **Niedersuess, Peter**
  **4021 Linz (AT)**
- **Semaan, Chantal**
  **08008 Barcelona (ES)**

(74) Representative: **Ter Meer Steinmeister & Partner Patentanwälte mbB**
**Nymphenburger Straße 4**
**80335 München (DE)**

(54) **A POLYETHYLENE MDO FILM WITH HIGH STIFFNESS, ADHESION AND IMPROVED BARRIER FORMING CAPABILITIES**

(57) The present invention relates to a layered polyethylene MDO film comprising high amounts of a specific ethylene copolymer with a narrow molecular weight distribution in a layer. This film provides a high stiffness and excellent adhesion properties. The invention further relates to a barrier film comprising a metal layer or barrier coat and the aforementioned layered polyethylene MDO film, to a process for forming a barrier film from said layered polyethylene MDO film, to a laminate and to an article comprising the barrier film. The oxygen and vapor permeability of the barrier film are low so that the barrier film is particularly suited for packaging foodstuff or other oxygen sensitive products.

EP 4 674 614 A1

(52) Cooperative Patent Classification (CPC): (Cont.)
B32B 2250/242; B32B 2255/10; B32B 2255/205;
B32B 2255/26; B32B 2255/28; B32B 2270/00;
B32B 2307/31; B32B 2307/516; B32B 2307/54;
B32B 2307/72; B32B 2307/7244; B32B 2307/7246;
B32B 2307/7376; B32B 2439/00; B32B 2439/70

## Description

The present invention relates to a layered polyethylene MDO film comprising high amounts of a specific ethylene copolymer with a narrow molecular weight distribution in a layer. This film provides a high stiffness and excellent adhesion properties. The invention further relates to a barrier film comprising a metal layer or barrier coat and the aforementioned layered polyethylene MDO film, to a process for forming a barrier film from said layered polyethylene MDO film, to a laminate and to an article comprising the barrier film. The oxygen and vapor permeability of the barrier film are low so that the barrier film is particularly suited for packaging foodstuff or other oxygen sensitive products.

## Technical Background

Laminate film solutions for flexible packaging have evolved significantly in the recent decade, aiming to meet various needs such as excellent barrier properties, a high level of sustainability, and a good visual appearance. To achieve a high level of sustainability it is the aim to replace traditional mixed material packaging structures by monomaterial structures. This makes demanding separation tasks redundant and facilitates the whole recycling procedure. For example, all-PE MDO films (Machine Direction Oriented films) were developed to replace BOPP films (Biaxially Oriented Polypropylene films) and BOPET films (Biaxially Oriented Polyethylene terephthalate films). Yet, the journey towards such sustainable monomaterial structures comes with a set of challenges.

One of the primary challenges in developing all-PE MDO films is achieving barrier properties comparable to the conventional mixed material multi-layered films. Barrier properties are crucial for preserving the freshness and shelf-life of packaged products, protecting them from moisture, oxygen, light, and other external factors. However, polyethylene film materials generally show poor barrier properties, such as oxygen and moisture barrier properties.

To compensate for their poor barrier behavior, one surface of the PE laminate films may be metallized or furnished with a special barrier coating. In this way a PE laminate film can be obtained that has a superior barrier layer for both moisture (low water vapor transmission rate, WVTR) and oxygen (low oxygen transmission rate, OTR).

However, common polyethylene film materials used in surface layers of multilayer polyethylene films are not suitable for metallization or barrier coating due to their inability to match the critical requirements like good coating adhesion and bond strength while still showing acceptable optical properties, like low haze.

Combination of properties like good receptiveness for metallization or barrier coating, in particular good metal bond strength, low decay of surface energy, good gloss and sufficient film stiffness are not available in PE flexible packaging solutions today. Thus, it is an object of the present invention to provide a layered polyethylene film which yields a metallized or barrier coated polyethylene film having the desired combination of properties as outlined above, in particular having sufficient film stiffness with a tensile modulus of more than 1000 MPa in machine direction and an excellent adhesion to the metal layer or barrier coat so that a barrier film with excellent barrier properties can be obtained.

In this context, WO 2017/102704 A1 discloses a full PE lamination structure comprising a MDO film, which is coated with a thin ceramic or metal coating by vapor deposition technique and at least a second film having a sealant layer. Yet, the first film shows insufficient stiffness and has a tensile modulus in MD direction of less than 1000 MPa. Hence, there is still a need for improvement of this packaging solution.

WO 2022/184598 A1 describes a layered polyethylene film suitable as a sealing film for packaging solutions. It comprises a layer for barrier coating made of a composition, which comprises a catalytically produced polyethylene component AO which is an ethylene copolymer having an $MFR_2$ of from 0.5 to 10 g/min and a density of 920 to 935 kg/m$^3$ and wherein the composition has a xylene soluble fraction of 2 wt.-% or less. Whereas such a film has good optical properties and good barrier properties once metallized, it is not stiff enough to provide a rigid part of an article or packaging. Hence, compared to the layered polyethylene film from WO 2022/184598 A1 it also remains to provide a film with improved mechanical properties.

WO 2014/209411 A1 purports to provide a PE-based film with good metal adhesion. To that end, it defines a multi-layer structure comprising a layer containing at least 50% by weight of an ethylene/$\alpha$-olefin interpolymer composition that has less than 30% by weight of units derived from one or more $\alpha$-olefin comonomers, a Comonomer Distribution Constant in the range of from 45 to 400 and is free from any migratory additives. With these criteria, the claimed solution is very specific and not straightforward to produce.

Similarly, WO 2020/155795 A1 discloses a metallized film comprising at least one polyethylene layer having no more than 300 ppm of metal stearate, such as calcium stearate or zinc stearate, and no more than 50 ppm stearic acid based on the total weight of the film. Also this imposes very specific restrictions on the polyethylene film material in terms of additives that may be present. Furthermore, the polyethylene grade that is suggested to be used on high amounts within in the metallizable layer has a very low density.

WO 2014/160571 A1 describes a monolayer film comprising a blend of two linear polyethylene resins and at least 50 ppm of a nucleating agent. This film is asserted to have remarkable barrier properties without the need for metallization or the deposition of a barrier layer. Yet, the achieved moisture vapor transmission rate can still not compete with those of

metallized films.

US 2017/0232706 A1 relates to a multilayer metallized cast film, where a metallizable second layer comprises a HDPE grade having a density greater than 0.94 g/$cm^3$ and a melt index greater than 2.0 g/10 min. Whereas good metal adhesion was achieved, the mechanical properties such as the modulus of this multilayer metallized cast film have to be enhanced.

Summarizing and in view of the above, the need for layered polyethylene films with an improved balance of properties remains.

**Summary of the Invention**

The above identified needs are satisfied by the layered polyethylene film with the features of independent claim 1, by the barrier film according to claim 13, comprising the layered polyethylene film, by the process according to claim 14 for forming a barrier film and by the laminate and article according to claim 15. comprising the barrier film. Advantageous embodiments may be derived from the dependent claims.

**Detailed Description of the Embodiments**

The layered polyethylene film according to the present invention comprises a layer A and at least one layer B. Layer A comprises, based on the total weight of layer A, more than 90 wt.-% of an ethylene copolymer having a density of from 910 to 945 kg/$m^3$, determined according to ISO 1183-1:2004 (method A); and a Mw/Mn, determined by means of Gel Permeation Chromatography according to ISO 16014-1:2003, of from 2.0 to 8.0. Furthermore, the layered polyethylene film is a machine oriented film.

It has surprisingly been found that such a film exhibits high adhesion strength of layer A to a barrier coat or metal layer. This is important since the film will be laminated to other films in packaging applications. If the adhesion strength between the layered polyethylene film and the barrier coat or metal layer is not high enough this will result in an overall poor adhesion strength in the packaging, leading to the problem of delamination and insufficient performance. Furthermore, excellent and long-lasting barrier properties are also only achieved if the adhesion strength between the layer A and the barrier coat or metal layer is high enough. Moreover, it has been found that the films according to the present invention also exhibit very good mechanical properties. Due to that, excellent barrier films can be obtained that may also easily be recycled.

<u>Polyethylene Film</u>

In a preferred embodiment, the polyethylene film does not comprise polypropylene, polyethylene terephthalate, polyamide, ethylene-vinylalcohol-copolymer or acid copolymer, such as acrylic acid copolymer. More preferably, the polyethylene film does not comprise any non-polyethylene based polymers, *i.e.* polymers other than polyethylene are substantially absent. Thus, the layered polyethylene film may also be considered an all-PE MDO film. Films that are based on a single class of resin can be more easily recycled which improves sustainability and helps to save resources.

Additionally, it is preferred when the polyethylene film does not comprise an aluminum foil. It is further preferred when the polyethylene film does not comprise a metal foil. The term "metal foil" or "aluminum foil" is understood to refer to a sheet or layer of the respective material with a thickness of more than 1 $\mu$m, in particular more than 5 $\mu$m. The use of such a foil results in a rather stiff, bulky and weighty barrier film. Moreover, foils are often prone to crinkling and are responsible for undesirable optical properties. In addition, films containing an aluminum foil as barrier layer can generally not be recycled easily and have therefore higher environmental impact.

Furthermore, from a viewpoint of enhancing mechanical properties, it is preferred when the layered polyethylene film, in particular layer A of the layered polyethylene film, does not comprise an ethylene plastomer, such as an ethylene based octene plastomer. This is especially the case because it was found that layered polyethylene films comprising such a plastomer tend to have a reduced stiffness, such as a low value for the tensile modulus in machine directions and/or transverse direction.

In order to achieve the desired film properties, the polyethylene film is configured as a multilayer polyethylene film. In contrast to that, monolayer polyethylene films shall not belong to the present invention.

Regarding the number of layers, it is noted that the polyethylene film preferably comprises or consists of layer A and 2-6 layers B. For example, the polyethylene film may comprise or consist of layer A and 4 layers B. In this example, the film is a 5-layer film. Yet, it is equally preferred if the film comprises or consists of layer A and 2 layers B, making it a 3-layer film.

With respect to the composition, the polyethylene film may be a 5-layer film and may have a configuration of the B4/B3/B2/B1/A type. Layers B1-B4 may have the same composition. Preferably, only layers B1 and B3 have the same composition. It is further preferred if layer B4 is a layer consisting of one type of polyethylene only. Furthermore, layer B4

may have a composition different from the other layers B (B1. B2, B3) of the film.

It is appreciated that when the polyethylene film comprises or consists of layer A and a number of "x" layers B, with "x" being from 2 to 10, layer Bx preferably is a layer consisting of one type of polyethylene only. Layer Bx is to be understood as the layer that is most distant from layer A and preferably forms an external layer of the polyethylene film.

The layered oriented polyethylene film is an MDO film (machine-direction oriented film). Preferably, the film is only uniaxially oriented, *i.e.* it is oriented in machine direction but not in transverse direction. In other words, the layered oriented polyethylene film is only oriented in machine direction. By orienting it in machine direction, the mechanical properties of the film, such as tensile modulus and tensile strength, are greatly improved.

Preferably, the layered oriented polyethylene film is oriented in machine direction in a draw ratio (stretch ratio) of 1:1.5 to 1: 12, more preferably in a draw ratio of 1:4 to 1:8, such as 1:6.

The polyethylene film preferably has a primary total thickness, i.e. a total thickness before stretching/orienting/-drawing, of from 100 to 200 μm, more preferably of from 120 to 180 μm. After stretching/orienting/drawing, the film preferably has a final total thickness of from 10 to 60 μm, preferably of from 20 to 40 μm.

In case the polyethylene film is a 5-layer film, the primary total thickness may be distributed to the single layers as follows: The thickness of layer A preferably corresponds to 5 to 15% of the total film thickness. The total film thickness may be the primary total film thickness or the final total film thickness since all layers are stretched to the same degree. The thickness of layer B 1, which is in direct contact with layer A, may be from 10 to 20% of the total film thickness. The thickness of layer B2, which is in direct contact with layer B 1 and which is disposed on the side of layer B 1 opposite to layer A, may be from 40 to 60% of the total film thickness. The thickness of layer B3, which is in direct contact with layer B2 and which is disposed on the side of the layer B2 opposite to layer B 1, may be from 10 to 20% of the total film thickness. Last but not least, the thickness of layer B4, which is disposed on the side of layer B3 opposite to layer B2, may be from 5 to 15% of the total film thickness.

The layered polyethylene film according to the present invention preferably has a tensile modulus in machine direction, determined according to ISO 527-3 at room temperature on films with a thickness of 25 μm, of more than 1000 MPa, more preferably more than 1250 MPa; even more preferably more than 1400 MPa and less than 2500 MPa, for example less than 2300 MPa. A tensile modulus of the layered polyethylene film in transverse direction, determined according to ISO 527-3 at room temperature on films with a thickness of 25 μm, is preferably more than 1000 MPa, more preferably more than 1300 MPa, even more preferably more than 1500 MPa and less than 2100 MPa.

Advantageously, the tensile strength of the layered polyethylene film in machine direction, determined according to ISO 527-3 at room temperature on films with a thickness of 25 μm, is more than 180 MPa, more preferably more than 200 MPa and less than 250 MPa. The tensile strength of the layered polyethylene film in transverse direction, determined according to ISO 527-3 at room temperature on films with a thickness of 25 μm, is preferably more than 28 MPa, more preferably of more than 30 MPa and less than 38 MPa.

<u>Layer A</u>

Layer A preferably is one of the external layers of the layered polyethylene film. Layer A may also be denoted metallizable layer or layer for barrier coating. A metallizable layer is to be understood as a layer that is designated for the deposition of a metal, for example with the aim of imparting barrier properties. A layer for barrier coating is intended to be coated with a coating dispersion to enhance the barrier properties. Preferably, layer A is modified by a surface treatment. Such a surface treatment may be performed before metallizing or depositing a barrier coat. For example, layer A may be treated by corona discharge to create a polar surface.

Preferably, layer A comprises at least 90.0 wt.-%, preferably at least 95.0 wt.-%, more preferably at least 97.0 wt.-%, in particular at least 98.0 wt.-%, of the ethylene copolymer based on the total weight of layer A. Due to this high amount of the ethylene copolymer, the layer A provides excellent adhesion to metals, for example aluminum.

Layer A may further comprise up to 2.0 wt.-%, preferably from 0.01 to 1.5 wt.-%; more preferably from 0.01 to 1.0 wt.-%, most preferably from 0.01 to 0.5 wt.-%, based on the total weight of layer A of at least one additive. However, layer A does preferably not comprise a slip agent. Instead, the at least one additive is preferably selected from the group consisting of antioxidants, process stabilizers, pigments, UV-stabilizers, antistatic additives, acid scavengers and combinations thereof. Suitable acid scavengers include hydrotalcites, zinc oxide, and $C_{11}$ to $C_{20}$ alkyl carboxylates, e.g., stearates such as magnesium stearate, calcium stearate and zinc stearate. The at least one additive may be added to the ethylene copolymer during preparation of layer A or may already be contained in the ethylene copolymer used for the preparation of layer A.

Generally, each of the additives may be present in an amount of 0 to 5000 ppm, based on the total weight of the respective layer composition used for the preparation of the layer. The additives are generally available from several suppliers and are contained in compositions as single additive or as admixtures of two or more additives.

Dimension-wise, layer A preferably has a thickness corresponding to 5 to 15% of the total thickness of the layered polyethylene film. In a particularly preferred embodiment, layer A has a thickness corresponding to 8 to 12%, such as 10%,

of the total thickness of the layered polyethylene film.

Ethylene Copolymer

The term "ethylene copolymer" generally refers to a polyethylene which contains one or more types of comonomers.

The ethylene copolymer in the present invention preferably is a copolymer of ethylene with at least two different comonomers selected from the group of $C_4$-$C_{10}$ alpha-olefin comonomers. In one embodiment, the ethylene copolymer is selected from the group of $C_4$-$C_8$ alpha-olefin comonomers, preferably from the group of $C_4$-$C_6$ alpha-olefin comonomers.

The ethylene copolymer may be a multimodal ethylene copolymer. More preferably, the ethylene copolymer is a multimodal ethylene terpolymer, such as a bimodal ethylene terpolymer. In a particularly preferred embodiment, the ethylene copolymer is a bimodal $C_2C_4C_6$ terpolymer.

When the ethylene copolymer is a multimodal ethylene terpolymer, it is further preferred when the total amount of comonomers present in the multimodal ethylene terpolymer is of 0.5 to 10 mol%, preferably of 1.0 to 8 mol%, more preferably of 1.0 to 5 mol%, more preferably of 1.2 to 5.0 mol%, as determined by $^{13}$C-NMR spectroscopy. When the ethylene copolymer is a copolymer of ethylene with $C_4$- and $C_6$ alpha-olefin comonomers, i.e. it is a $C_2C_4C_6$ terpolymer, it is further preferred when a 1-butene content, as determined by $^{13}$C-NMR spectroscopy, ranges from 0.1 to 10 wt.-%, more preferably from 0.2 to 1 wt.-%; and/or a 1-hexene content, as determined by $^{13}$C-NMR spectroscopy, ranges from 0.1 to 20 wt.-%, more preferably from 1 to 10 wt.-%, and most preferably from 2 to 7 wt.-%.

The ethylene copolymer can be catalytically produced. The term "catalytically produced" in the present invention preferably does not cover an ethylene copolymer that is produced in a process using a Ziegler-Natta catalyst. Instead "catalytically produced" refers to a polymer that has been produced in a process using a single-site catalyst, such as a metallocene catalyst. The metallocene catalyst comprises a transition metal (M) of Group 3 to 10 of the Periodic Table (IUPAC 2007) or of an actinide or lanthanide.

In an embodiment the metallocene catalyst comprises an organometallic compound having the following formula (I):

$$(L)_mR_nMX_q \qquad (I)$$

wherein

"M" is a transition metal (M) transition metal (M) of Group 3 to 10 of the Periodic Table (IUPAC 2007),

each "X" is independently a monoanionic ligand, such as a σ-ligand,

each "L" is independently an organic ligand which coordinates to the transition metal "M",

"R" is a bridging group linking said organic ligands (L),

"m" is 1, 2 or 3, preferably 2

"n" is 0, 1 or 2, preferably 1,

"q" is 1, 2 or 3, preferably 2 and

m+q is equal to the valency of the transition metal (M).

"M" is preferably selected from the group consisting of zirconium (Zr), hafnium (Hf), or titanium (Ti), more preferably selected from the group consisting of zirconium (Zr) and hafnium (Hf). "X" is preferably a halogen, most preferably Cl.

Most preferably the organometallic compound (C) is a metallocene complex which comprises a transition metal compound, as defined above, which contains a cyclopentadienyl, indenyl or fluorenyl ligand as the substituent "L". Further, the ligands "L" may have substituents, such as alkyl groups, aryl groups, arylalkyl groups, alkylaryl groups, silyl groups, siloxy groups, alkoxy groups or other heteroatom groups or the like. Suitable metallocene catalysts are known in the art and are disclosed, among others, in WO-A-95/12622, WO-A-96/32423, WO-A-97/28170, WO-A-98/32776, WO-A-99/61489, WO-A-03/010208, WO-A-03/051934, WO-A-03/051514, WO-A-2004/085499, EP-A-1752462 and EP-A-1739103.

In another embodiment, the metallocene catalyst comprises an organometallic compound having the following formula (II):

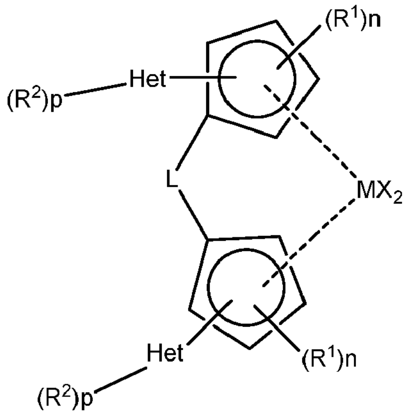

(II)

wherein each X is independently a halogen atom, a $C_{1-6}$-alkyl, $C_{1-6}$-alkoxy group, phenyl or benzyl group;

each Het is independently a monocyclic heteroaromatic group containing at least one heteroatom selected from O or S;
L is $-R'_2Si-$, wherein each R' is independently $C_{1-20}$-hydrocarbyl or $C_{1-10}$-alkyl substituted with alkoxy having 1 to 10 carbon atoms;
M is Ti, Zr or Hf;
each $R^1$ is the same or different and is a $C_{1-6}$-alkyl group or $C_{1-6}$-alkoxy group;
each n is 1 to 2;
each $R^2$ is the same or different and is a $C_{1-6}$-alkyl group, $C_{1-6}$-alkoxy group or $-Si(R)_3$ group; each R is $C_{1-10}$-alkyl or phenyl group optionally substituted by 1 to 3 $C_{1-6}$-alkyl groups; and each p is 0 to 1.

Preferably, the compound of formula (II) has the structure

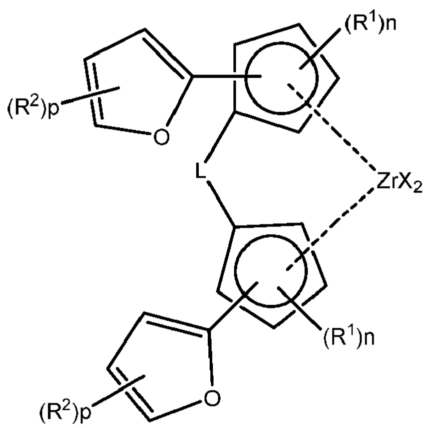

(II′)

wherein each X is independently a halogen atom, a $C_{1-6}$-alkyl, $C_{1-6}$-alkoxy group, phenyl or benzyl group;
L is a $Me_2Si$-;
each $R^1$ is the same or different and is a $C_{1-6}$-alkyl group, e.g. methyl or t-Bu;
each n is 1 to 2;
$R^2$ is a $-Si(R)_3$ alkyl group; each p is 1;
each R is $C_{1-6}$-alkyl or phenyl group.

Highly preferred complexes of formula (II) are

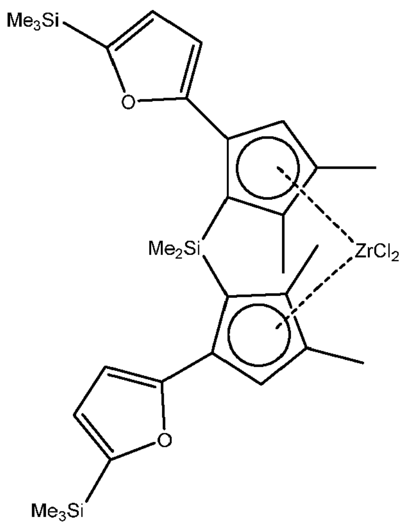

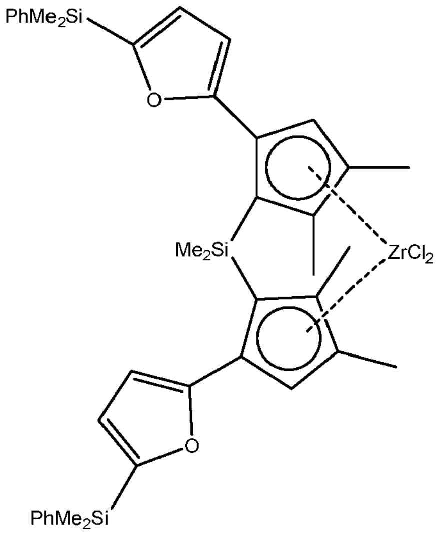

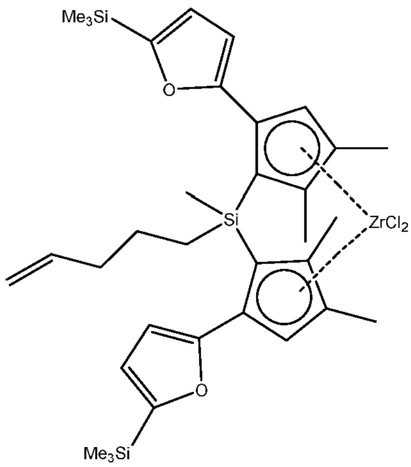

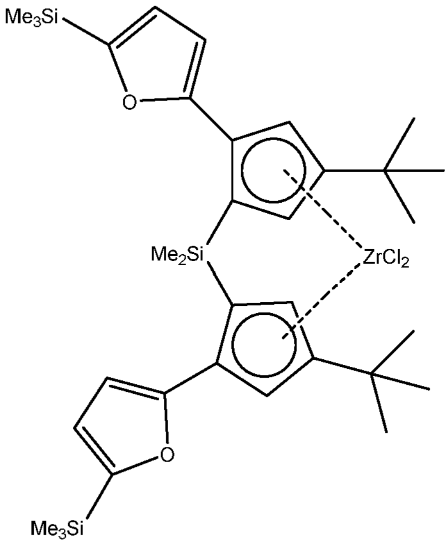

Most preferably the complex dimethylsilanediylbis[2-(5-trimethylsilylfuran-2-yl)-4,5-dimethylcyclopentadien-1-yl] zirconium dichloride is used.

The metallocene catalyst is preferably used with a cocatalyst, which is also known as an activator. Suitable activators are metal alkyl compounds and especially aluminum alkyl compounds or boron based compounds (such as borates) known in the art. Especially suitable activators used with metallocene catalysts are alkylaluminium oxy-compounds, such as methylalumoxane (MAO), tetraisobutylalumoxane (TIBAO) or hexaisobutylalumoxane (HIBAO).

The ethylene copolymer may be obtained in a process comprising three polymerization steps, wherein the first and second polymerization steps are preferably conducted as a slurry polymerization. The ethylene copolymer may more preferably be obtained in a process comprising two polymerization steps, wherein the first polymerization step is preferably conducted as a slurry polymerization, more preferably as a slurry polymerization in a loop reactor, and wherein the second polymerization step is conducted in gas phase. The ethylene copolymer may be obtained in a Borstar® 2G process.

The ethylene copolymer may have a $MFR_2$ (2.16 kg, 190 °C) of 0.1 to 3.0 g/10 min, preferably of 0.3 to 2.0 g/10 min, more preferably of 0.75 to 1.75 g/10 min, measured according to ISO1133-1.

Furthermore, the ethylene copolymer may have a $MFR_5$ (5 kg, 190 °C) of 0.1 to 5.0 g/10 min, preferably of 0.5 to 2.5 g/10 min, more preferably of 0.8 to 2.0 g/10 min, measured according to ISO1133-1.

The ethylene copolymer may have a $MFR_{21}$ (21.6 kg, 190°C) of 5 to 60 g/10 min, preferably of 10 to 50 g/10 min, more preferably of 15 to 35 g/10 min, measured according to ISO1133-1.

It is further preferred if the ethylene copolymer has a flow rate ratio ($FRR_{21/2}$), expressed as $MFR_{21}/MFR_2$ of 5 to 50, preferably of 10 to 40, more preferably of 15 to 25.

The ethylene copolymer preferably has a density, determined according to ISO 1183-1:2004 (method A), of from

915 to 935 kg/$m^3$, more preferably of from 917 to 930 kg/$m^3$.

Also, the ethylene copolymer preferably has a narrow molecular weight distribution, which may be, when expressed in terms of Mw/Mn, the latter being determined by means of Gel Permeation Chromatography and according to ISO 16014-1:2003, of from 2.5 to 6.5, for example of from 3.0 to 5.0.

It is further preferred when the ethylene copolymer has a $MFR_2$ (2.16 kg, 190 °C) of 0.1 to 3 g/10 min, measured according to ISO1133-1, and a $MFR_{21}/MFR_2$ of 5 to 50, and when the ethylene copolymer comprises at least an ethylene polymer component (A) and an ethylene polymer component (B), wherein the $MFR_2$ (2.16 kg, 190 °C) of the ethylene polymer component (A), measured according to ISO1133-1, is different from the $MFR_2$ (2.16 kg, 190 °C) of the ethylene polymer component (B), also measured according to ISO1133-1.

Preferably, the $MFR_2$ (2.16 kg, 190 °C) of the ethylene polymer component (A), measured according to ISO1133-1, is higher than the $MFR_2$ (2.16 kg, 190 °C) of the ethylene polymer component (B), also measured according to ISO1133-1. In one embodiment, the ratio of the $MFR_2$ (2.16 kg, 190 °C) of the ethylene polymer component (A), measured according to ISO1133-1, to the $MFR_2$ (2.16 kg, 190 °C) of the ethylene copolymer, measured according to ISO1133-1, is of 2 to 50, preferably of 5 to 40, preferably of 10 to 30.

The ethylene copolymer may further be multimodal with respect to comonomer type and/or comonomer content. In other words, the ethylene polymer component (A) may be a copolymer of ethylene with a first $C_4$-$C_{10}$ alpha-olefin comonomer and the ethylene polymer component (B) may be a copolymer of ethylene with a second $C_4$-$C_{10}$ alpha-olefin comonomer, wherein the first $C_4$-$C_{10}$ alpha-olefin comonomer is different from the second $C_4$-$C_{10}$ alpha-olefin comonomer. Preferably, the first $C_4$-$C_{10}$ alpha-olefin comonomer is 1-butene and the second $C_4$-$C_{10}$ alpha-olefin comonomer is 1-hexene.

The ratio of [the amount (mol%) of the $C_4$-$C_{10}$ alpha-olefin comonomer present in ethylene polymer component (A)] to [the amount (mol%) of $C_4$-$C_{10}$ alpha-olefin comonomer of the ethylene copolymer (B)] preferably is of 0.2 to 0.6, more preferably of 0.24 to 0.5. The ethylene polymer component (A) may have a lower amount (mol%) of comonomer than the ethylene polymer component (B). The amount (mol%) of $C_4$-$C_{10}$ alpha-olefin comonomer present in the ethylene polymer component (A) preferably is of 0.03 to 5.0 mol%, more preferably of 0.05 to 4.0 mol%, in particular of 0.1 to 3.0 mol%, such as of 0.1 to 2.0, mol%.

The ethylene copolymer may further be multimodal with respect to density. In other words, the density of the ethylene polymer component (A), determined according to ISO 1183-1:2004 (method A), is preferably different, in particular higher, than the density of the ethylene polymer component (B), determined according to ISO 1183-1:2004 (method A).

Ethylene copolymers meeting the specifications above are, for example, disclosed as Inv. Examples 1-3 of WO 2016/083208 A1. The methods for the production of these example ethylene copolymers are likewise disclosed in WO 2016/083208 A1.

Layer B

The layered polyethylene film according to the present invention comprises at least one layer B. The at least one layer B preferably comprises or consists of a high density polyethylene having a density of more than 950 kg/$m^3$ to less than 970 kg/$m^3$, determined according to ISO 1183-1:2004 (method A).

The high density polyethylene may have a density of more than 952 kg/$m^3$ to less than 968 kg/$m^3$, determined according to ISO 1183-1:2004 (method A) and an $MFR_2$ (2.16 kg, 190 °C), measured according to ISO1133-1, of 0.3 to 3.0 g/10 min. In a preferred embodiment, the high density polyethylene may be a multimodal high density polyethylene. If so, the high density polyethylene may comprise at least two fractions, namely 30 to 70 wt.-% relative to the total weight of the multimodal HDPE, of a lower molecular weight fraction being a polyethylene with a density, determined according to ISO 1183-1:2004 (method A), in the range of 955 to 980 kg/$m^3$ and an $MFR_2$ (2.16 kg, 190 °C), measured according to ISO1133-1, of 100 to 2000 g /10 min; and 30 to 70 wt.-% relative to the total weight of the multimodal HDPE, of a higher molecular weight fraction being a polyethylene with a density, determined according to ISO 1183-1:2004 (method A), in the range of 925 to 970 kg/$m^3$ and an $MFR_2$ (2.16 kg, 190 °C), measured according to ISO1133-1, of 0.0001 to 1.0 g/10 min.

In a preferred embodiment, the high density polyethylene density may have a density, determined according to ISO 1183-1:2004 (method A), from 952 kg/$m^3$ to 958 kg/$m^3$. Furthermore, the high density polyethylene may have a Mw/Mn, determined by means of Gel Permeation Chromatography according to ISO 16014-1:2003, of from 10 to 30, preferably of from 12 to 20, more preferably of from 13 to less than 17.

In addition or as an alternative to the high density polyethylene described above, the at least one layer B may comprise or consists of an ethylene copolymer having a density of from 925 to 950 kg/$m^3$, determined according to ISO 1183-1:2004 (method A), and a Mw/Mn, determined by means of Gel Permeation Chromatography according to ISO 16014-1:2003, of from 10 to 30, such as from 17 to 25.

Beneficial properties may be achieved if at least one, preferably at least two, in particular at least three layer(s) B comprise(s) or consist(s) of an ethylene copolymer having a density of from 925 to 950 kg/$m^3$, determined according to ISO

1183-1:2004 (method A), and a Mw/Mn, determined by means of Gel Permeation Chromatography according to ISO 16014-1:2003, of from 10 to 30, such as from 17 to 25.

In an embodiment, the at least one layer B may comprise the same ethylene copolymer that is present in layer A. In other words, the ethylene copolymer in the at least one layer B and layer A may be the same. However, in this case, it is preferred if neighboring layers in the polyethylene film with a direct contact surface comprise different amounts of the ethylene copolymer.

At least one layer B, preferably layer B1, which is disposed on layer A, may comprise (i) from 10 to 50 wt.-% of an ethylene copolymer having a density of from 925 to 950 kg/m$^3$, determined according to ISO 1183-1:2004 (method A), and a Mw/Mn, determined by means of Gel Permeation Chromatography according to ISO 16014-1:2003, of from 10 to 30 and (ii) from 50 to 90 wt.-% of a high density polyethylene, wherein the weight percentages are based on the total weight of the respective layer B.

If there is more than one layer B, at least one further layer B (i.e. layer Bx, with "x" preferably being 2, 4, 6, 8 or 10) may comprise, based on the total weight of the respective layer B, more than 90 wt.-% of a high density polyethylene, preferably more than 90 wt.-% of a high density polyethylene (ii) having a density, determined according to ISO 1183-1:2004 (method A), from 952 kg/m$^3$ to 958 kg/m$^3$ and optionally having a Mw/Mn, determined by means of Gel Permeation Chromatography according to ISO 16014-1:2003, of from 10 to 30, such as from 12 to 20, for example from 13 to less than 17.

Preferably, none of the layers B comprises a high density polyethylene having a density of below 950.0 kg/m$^3$.

Furthermore, it is noted that also the at least one layer B may comprise up to 2.0 wt.-%, preferably from 0.01 to 1.5 wt.-%; more preferably from 0.01 to 1.0 wt.-%, most preferably from 0.01 to 0.5 wt.-%, based on the total weight of the respective layer B of at least one additive, wherein the additive is selected from the group consisting of antioxidants, process stabilizers, pigments, UV-stabilizers acid scavengers and combinations thereof.

Process for forming the polyethylene film

The process for forming the polyethylene film according to the present invention comprises a step where the film is extruded as a blown film and an orientation step.

Extrusion Step

Blends or mixtures of two polyethylene used in the above described layers can be produced by any suitable melt mixing process at temperatures above the melting point of the respective blend or mixture. Typical devices for performing said melt mixing process are twin screw extruders, single screw extruders optionally combined with static mixers, chamber kneaders like Farrel kneaders, Banbury type mixers and reciprocating co-kneaders like Buss co-kneaders. Preferably, the melt mixing process is carried out in a twin screw extruder with high intensity mixing segments and preferably at a temperature of 170 to 270°C, more preferably of 180 to 250°C.

Afterwards the layered polyethylene film is formed by blown film extrusion, more preferably by co-extrusion processes, which in principle are known and available to the skilled person.

Typical processes for preparing a layered polyethylene film in accordance with the present invention are extrusion processes through an angular die, followed by blowing into a tubular film by forming a bubble which is collapsed between the rollers after solidification. This film can then be slid, cut or converted, such as by using a gazette head, as desired. Conventional film production techniques may be used in this regard. Typically the layers of the film are coextruded at a temperature in the range of from 160 to 240°C and cooled by blowing gas (generally air) at a temperature of 5 to 50°C, to provide a frost line height of 1 or 2 to 8 times the diameter of the die. The blow up ratio (BUR) can be in the range of from 1 (1 :1 ) to 4 (1 :4), preferably 1.5 (1 :1 .5) to 3.5 (1 :3.5), more preferably from 2 (1 :2) to 3 (1 :3). The film preparation process steps of the invention are known and may be carried out in one film line in a manner known in the art. Such film lines are commercially available, for example from Windmoller & Holscher, Reifenhauser, Hosokawa Alpine, etc.

If the polyethylene film is a three-layer structure this can be produced on a 3-layer co-extrusion line, but in some embodiments it may be appreciated that the used co-extruder is a 5-, 7- or 11-layer co-extrusion line. From the viewpoint of obtaining excellent film properties, it is preferred when the polyethylene film is a five-layer structure. In other words, it is preferred, when the polyethylene film is produced on a 5-layer co-extrusion line.

Orientation Step

The film is oriented at least in the machine direction according to the present invention. To that end, the obtained layered polyethylene film is subjected to a subsequent stretching step, wherein the film is stretched (also called: "drawn" or "oriented") in the machine direction (MDO). Stretching may be carried out by any conventional technique using any conventional stretching devices which are well known to those skilled in the art.

The MDO process can be done in-line, wherein the MDO unit is directly linked to the blown film unit, *i.e.* the film leaving the blown film line is directly transferred in the MDO unit.

The MDO process can also be done off-line, wherein the MDO unit is an autonomous unit. In this case the film leaving the blown film line is first wound on a winder and is then supplied to the off-line MDO unit, where the film has to be unwound on an un-winder unit before it can be stretched.

During the MDO, the film obtained from the blown-film line is heated to an orientation temperature. Preferably, the temperature range for orientation can be 25K below the VICAT A-level of the ethylene copolymer contained in layer A up to the melting temperature of the ethylene copolymer. The heating is preferably performed utilizing multiple heating rollers.

Next, the heated film is fed into a slow drawing roll with a nip roller, which has the same rolling speed as the heating rollers. The film then enters a fast drawing roll. The fast drawing roll has a speed that is 2 to 10 times faster than the slow draw roll, which effectively orients the film on a continuous basis.

The oriented film then enters annealing thermal rollers, which allow stress relaxation by holding the film at an elevated temperature for a period of time.

The annealing temperature is preferably within the same temperature range as used for stretching or slightly below (e.g. 10 to 20 K below), with room temperature being the lower limit. Finally, the film is cooled through cooling rollers to an ambient temperature.

The ratio of the film's total thickness before and after orientation is called "drawdown ratio" or stretch ratio.

The stretch ratio may vary depending on many factors including the desired final total thickness of the film, the film properties, and the number of layers included in the film. The preparation process of the uniaxially MD oriented layered polyethylene film of the invention comprises at least the steps of forming the layered polyethylene film and stretching the obtained layered polyethylene film in the machine direction in a draw ratio of 1:1.5 to 1:12, preferably in the range of 1:4 to 1:8.

The film is stretched 1.5 to 12 times up its original length in the machine direction. This is stated herein as a stretch ratio of 1:1.5 to 1:12, *i.e.* "1" represents the original length of the film and "1.5" or "12" denotes that it has been stretched to 1.5 or 12 times that original length. An effect of stretching (or drawing) is that the thickness of the film is similarly reduced. Thus a stretch ratio of 1:1.5 or 1:12 preferably also means that the thickness of the film is less than 1.5 times or 12 times the original thickness.

After orientation, the first film of the invention may have a final total thickness of 10 to 60 μm, preferably 20 to 40 μm.

By way of example, to yield a film which a final total thickness of 40 μm using a stretch ratio of 1:3.0, the film will need a primary total thickness of 120 μm.

Barrier film

The present invention further provides a barrier film comprising the layered polyethylene film according to one of the preceding claims and a metal layer or barrier coat disposed on layer A. In preferred embodiments, the metal layer or barrier coat is an aluminum layer or a polyvinyl alcohol-based polymer barrier coat. The thickness of the aluminum layer or the polyvinyl alcohol-based polymer barrier coat is advantageously from 1 to 250 nm respectively, such as 1 to 50 nm. Furthermore, the optical density (OD) of the barrier film resulting after metallization is preferably between 1.5 and 3.0, such as 2.3. The barrier film is suitable for packaging foodstuff.

Process for forming the barrier film

The present invention also provides a process for forming a barrier film comprising the layered polyethylene film as described above. In this process, layer A is preferably surface treated. The surface treatment can be realized by a plasma discharge, preferably by a low temperature corona discharge plasma in order to render layer A more polar. Preferably, the surface treatment is continued until layer A has a surface energy in a range of 35 to less than 70 dyne/cm, measured according to ASTM D-2578. Afterwards, the surface treated layer A is metallized or barrier coated.

Metallization is preferably done with aluminum, more preferably by physical vapor deposition, in particular until an aluminum layer with a thickness of at least 10 nm is obtained.

Barrier coating is preferably done by preparing a liquid coating composition and applying the coating composition to layer A of the layered polyethylene film of the present invention. The liquid coating composition can be obtained by preparing an aqueous dispersion of a polyvinyl alcohol-based polymer (PVA-based polymer), for example by dispersing the PVA-based polymer in a solvent containing water as a main component at normal temperature. The barrier coat is obtained after the applied liquid coating composition has dried. The method of drying is not particularly limited and may include a hot roll contact technique, a heat medium (air, oil, and the like) contact technique, an infrared heating technique and/or a microwave heating technique. Although representative drying conditions are a drying temperature of from 60 to 250°C and a drying time range of from 1 to 60 seconds, they depend on the thermal efficiency of the drying equipment.

The PVA-based polymer may be obtained by hydrolysis of a polyvinyl acetate-based polymer containing a vinyl ester component. Although a degree of hydrolysis of the vinyl ester component in the PVA-based polymer is not particularly limited, it is preferably 60 mol-% or more. The degree of hydrolysis of the vinyl ester component is more preferably 70 mol-% or more, even more preferably 80 mol-% or more, and most preferably 90 mol% or more. When the degree of hydrolysis is less than 60 mol-%, there is a possibility that the barrier property becomes insufficient.

In a further preferred embodiment, the PVA-based polymer is an ethylene-vinyl alcohol-based polymer (EVOH-based polymer). The latter can further improve the barrier property in high humidity conditions. Although the ethylene content in the EVOH-based polymer is not particularly limited, it is preferred to be from 1 to 50 mol%. In a case of the ethylene content exceeding 50 mol-%, there is a possibility that the barrier property of the coat becomes insufficient. The upper limit of the ethylene content is more preferably 20 mol-% or less because, in a case of the ethylene content exceeding 20 mol-%, it is necessary to add an alcohol to water in order to prepare the liquid coating composition. At the same time, in a case that the ethylene content is less than 1 mol-%, there is a possibility that the high humidity barrier property of coating becomes insufficient. The degree of hydrolysis of the PVA-based polymer and the ethylene content of the EVOH-based polymer can be determined by nuclear magnetic resonance (NMR).

The liquid coating composition may further comprise up to 5 wt.-% of additives. Those additives may be added to the aqueous dispersion of the PVA-based polymer, i.e. they may be added when dispersing the PVA-based polymer in a solvent containing water as a main component. The additives may be selected from the group consisting of plasticizers, antioxidants, pigments, ultraviolet absorbers, antistatic agents, crosslinkers, fillers, reinforcing agents for various fibers or the like. Alcohols may also be added as additives to improve the stability of the coating liquid and/or the leveling property for application.

Laminate and Article

Last but not least, the present invention is directed to a laminate or an article comprising the barrier film described above. In the laminate or the article the barrier film is preferably laminated to another layer, such as a layer of a sealing film. In this case, a sealing film may be disposed on the metal layer (or barrier coat) so that a laminate or an article with a layering Bx/Bx-1(/...)/A/metal layer/sealing film (or Bx/Bx-1(/...)/A/barrier coat/sealing film) is obtained. The barrier film according to the present invention is, for example, suitable for use in a packaging article that is to be sealed by a film, such as a film from the inventive examples in WO 2022/184598 A1. The laminate is also provided with the purpose of sealing and/or with the aim of providing a packaging article constituting a barrier to oxygen and water vapor diffusion, which is particularly relevant for packaging sensitive foodstuff.

## Examples

The nature of the present invention will become more clearly apparent in view of the examples below. The examples should, however, in no way limit the scope of the invention.

Measurement Methods - Materials

Density (ρ)

The density is determined according to ISO 1183-1:2004 (method A).

Molecular Weight Distribution (Mw/Mn)

The molecular Weight Distribution (Mw/Mn) is determined by means of Gel Permeation Chromatography according to ISO 16014-1:2003.

Melt Flow Rate ($MFR_2$, $MFR_5$, $MFR_{21}$)

The melt flow rate is measured according to ISO1133-1.

Comonomer contents (C4, C6)

Quantitative nuclear-magnetic resonance (NMR) spectroscopy was used to quantify the comonomer content of the polymers.

Quantitative $^{13}C\{^1H\}$ NMR spectra recorded in the molten-state using a Bruker Advance III 500 NMR spectrometer operating at 500.13 and 125.76 MHz for $^1H$ and $^{13}C$ respectively. All spectra were recorded using a $^{13}C$ optimised 7

mm magic-angle spinning (MAS) probehead at 150°C using nitrogen gas for all pneumatics. Approximately 200 mg of material was packed into a 7 mm outer diameter zirconia MAS rotor and spun at 4 kHz. This setup was chosen primarily for the high sensitivity needed for rapid identification and accurate quantification. {klimke06, parkinson07, castignolles09} Standard single-pulse excitation was employed utilising the NOE at short recycle delays {pollard04, klimke06} and the RS-HEPT decoupling scheme{fillip05,griffin07}. A total of 1024 (1k) transients were acquired per spectra. Quantitative $^{13}C\{^{1}H\}$ NMR spectra were processed, integrated and relevant quantitative properties determined from the integrals. All chemical shifts are internally referenced to the bulk methylene signal (δ+) at 30.00 ppm.

The amount of ethylene was quantified using the integral of the methylene (δ+) sites at 30.00 ppm accounting for the number of reporting sites per monomer:

$$E = I_{\delta+} / 2$$

The presence of isolated comonomer units is corrected for based on the number of isolated comonomer units present:

$$Etotal = E + (3*B + 2*H) / 2$$

where B and H are defined for their respective comonomers. Correction for consecutive and non-consecutive commoner incorporation, when present, is undertaken in a similar way.

Characteristic signals corresponding to the incorporation of 1-butene were observed and the comonomer fraction calculated as the fraction of 1-butene in the polymer with respect to all monomer in the polymer:

$$fBtotal = (Btotal / (Etotal + Btotal + Htotal)$$

The amount isolated 1-butene incorporated in EEBEE sequences was quantified using the integral of the *B2 sites at 38.3 ppm accounting for the number of reporting sites per comonomer:

$$B = I_{*B2}$$

The amount consecutively incorporated 1-butene in EEBBEE sequences was quantified using the integral of the ααB2B2 site at 39.4 ppm accounting for the number of reporting sites per comonomer:

$$BB = 2 * I\alpha\alpha B2B2$$

The amount non consecutively incorporated 1-butene in EEBEBEE sequences was quantified using the integral of the ββB2B2 site at 24.7 ppm accounting for the number of reporting sites per comonomer:

$$BEB = 2 * I\beta\beta B2B2$$

Due to the overlap of the *B2 and *βB2B2 sites of isolated (EEBEE) and non-consecutivly incorporated (EEBEBEE) 1 -butene respectively the total amount of isolated 1-butene incorporation is corrected based on the amount of non-consecutive 1-butene present:

$$B = I_{*B2} - 2* I\beta\beta B2B2$$

The total 1-butene content was calculated based on the sum of isolated, consecutive and non consecutively incorporated 1 -butene:

$$Btotal = B + BB + BEB$$

The total mole fraction of 1 -butene in the polymer was then calculated as:

$$fB = (Btotal / ( Etotal + Btotal + Htotal)$$

Characteristic signals corresponding to the incorporation of 1 -hexene were observed and the comonomer fraction calculated as the fraction of 1 -hexene in the polymer with respect to all monomer in the polymer: fHtotal = (Htotal / (Etotal + Btotal + Htotal)

The amount isolated 1 -hexene incorporated in EEHEE sequences was quantified using the integral of the* B4 sites at 39.9 ppm accounting for the number of reporting sites per comonomer:

$$H = I_{*B4}$$

The amount consecutively incorporated 1 -hexene in EEHHEE sequences was quantified using the integral of the ααB4B4 site at 40.5 ppm accounting for the number of reporting sites per comonomer:

$$HH = 2 * I\alpha\alpha B4B4$$

The amount non consecutively incorporated 1 -hexene in EEHEHEE sequences was quantified using the integral of the ββB4B4 site at 24.7 ppm accounting for the number of reporting sites per comonomer:

$$HEH = 2 * I\beta\beta B4B4$$

The total mole fraction of 1 -hexene in the polymer was then calculated as:

$$fH = (Htotal / (Etotal + Btotal + Htotal)$$

The mole percent comonomer incorporation is calculated from the mole fraction:

$$B [mol\%] = 100 * fB$$

$$H [mol\%] = 100 * fH$$

The weight percent comonomer incorporation is calculated from the mole fraction:

$$B [wt\%] = 100 * ( fB * 56.11) / ( (fB * 56.11) + (fH * 84.16) + ((1-(fB + fH)) * 28.05) )$$

$$H [wt\%] = 100 * ( fH * 84.16 ) / ( (f B * 56.11) + (fH * 84.16) + ((1-(fB + fH)) * 28.05) )$$

References:

Klimke, K., Parkinson, M., Piel, C., Kaminsky, W., Spiess, H.W., Wilhelm, M., Macromol. Chem. Phys. 2006;207:382.

Parkinson, M., Klimke, K., Spiess, H.W., Wilhelm, M., Macromol. Chem. Phys. 2007;208:2128.

Pollard, M., Klimke, K., Graf, R., Spiess, H.W., Wilhelm, M., Sperber, O., Piel, C., Kaminsky, W., Macromolecules 2004;37:813.

Filip, X., Tripon, C., Filip, C., J. Mag. Resn. 2005, 176, 239.

Griffin, J.M., Tripon, C., Samoson, A., Filip, C., and Brown, S.P., Mag. Res. in Chem. 2007 45, S1 , S198.

Castignolles, P., Graf, R., Parkinson, M., Wilhelm, M., Gaborieau, M., Polymer 50 (2009) 2373 Busico, V., Cipullo, R., Prog. Polym. Sci. 26 (2001) 443.

Materials

Table 1: Overview over materials used in example layered polyethylene films.

| | | |
|---|---|---|
| MB5568 | Multimodal, high density polyethylene | $\rho$ = 956 kg/m$^3$<br>Mw/Mn = 16<br>$MFR_2$ = 0.8 g/10 min<br>$MFR_{21}$ = 47 g /10 min<br>$FRR_{21/2}$ = 59 |
| PE 1 | High alpha olefin, trimodal ethylene terpolymer corresponding to: znLLDPE-2 of WO 2023/280799 A1 | $\rho$ = 941 kg/m$^3$<br>Mw/Mn = 21<br>$MFR_2$ = 0.4 g/10 min<br>$MFR_5$ = 1.6 g/10 min<br>$MFR_{21}$ = 35.2 g /10 min<br>$FRR_{21/2}$ = 88<br>$C_4$ = 0.9 wt.-%<br>$C_6$ = 3.1 wt.-% |
| FK2715 | Bimodal ethylene terpolymer | $\rho$ = 927 kg/m$^3$<br>Mw/Mn = 4<br>$MFR_2$ = 1.3 g/10 min<br>$MFR_{21}$ = 25 g /10 min<br>$FRR_{21/2}$ = 19<br>C4 = 0.6 wt%<br>C6 = 3.4 wt% |
| FB5600 | Bimodal ethylene copolymer | $MFR_2$ = 0.7<br>$\rho$ = 960 kg/m$^3$<br>Mw/Mn = 13 |
| FT5230 | Tubular LDPE | $MFR_2$ = 0.75<br>$MFR_{21}$ = 60 g /10 min<br>$\rho$ = 923 kg/m$^3$<br>Mw/Mn = 7 |
| FK1820 | Bimodal ethylene terpolymer | $MFR_2$ = 1.5<br>$MFR_{21}$ = 30 g /10 min<br>$\rho$ = 918 kg/m$^3$<br>Mw/Mn = 4 |
| Antiblock MB | Anti-block masterbatch Polybatch FSU-105-E by LyondellBasell | |

The materials listed in table 1 above have been used in example layered polyethylene films. Two example layered polyethylene films were prepared and subsequently metallized to obtain barrier films according to inventive example IE1 and comparative example CE1. More specifically, IE1 and CE1 were prepared in accordance with the information below. Both films, IE1 and CE1, had four layers B (B 1-B4) with respectively identical compositions. For layer A, a different polymer was chosen for each of the films.

The films were obtained by coextrusion on a 5-layer Alpine co-extrusion line with a die diameter of 400 mm and at a blow up ratio (BUR) of 1 :2.7. The formed films had a primary total thickness of 110 $\mu$m with layer B 1 amounting to 10% of the thickness, layer B2 amounting to 15% of the thickness, layer B3 amounting to 50% of the thickness, layer B4 amounting to 15% of the thickness and layer A amounting to 10% of the thickness.

Stretching was carried out using a monodirectional stretching machine manufactured by Hosokawa Alpine AG in Augsburg/Germany. The unit consists of preheating, drawing, annealing, and cooling sections, with each set at specific temperatures to optimize the performance of the unit and produce films with the desired properties. The heating was at 105 °C, the stretching was done at 115 °C, annealing and cooling was done at 110 ° down to 40 °C.

The film obtained from blown film extrusion was pulled into the orientation machine then stretched between two sets of nip rollers where the second pair runs at higher speed than the first pair resulting in the desired draw ratio. Stretching is carried out with the respective draw ratios to reach the desired thickness (draw ratios and final total thickness of machine-oriented films are given in table 2).

After preparation of the 5-layered polyethylene films, layer A was metallized with aluminum to obtain barrier films.

To that end, a plasma metallization was used until an optical density of 2.3 was obtained. In other words, the metallization of layer A was done after using a light plasma pre-treatment (corona discharge up to a surface tension of 48 dyne/cm). Metallization was performed by a physical vapor deposition process, in which the metal is heated and evaporated under vacuum and then condenses on layer A, resulting in a metal layer with a thickness of about 10-20 nm.

Besides preparation of IE1 and CE1, one additional example layered polyethylene film was prepared and subsequently metallized as outlined in WO 2022/184598 A1 for Inventive Example 2. Within the present application this film is referred to as comparative example CE2. CE2 is a non-oriented blown film. The mechanical properties of CE2 have been measured analogous to the mechanical properties of IE1 and CE1 (see below).

**Table** 2: Overview over the configurations of the layered polyethylene films contained in the example barrier films.

| | IE1 | CE1 | CE2 |
|---|---|---|---|
| **Layer B4** | MB5568 | MB5568 | FK1820 (80%) + FT5230 (19%) + Antiblock MB (1%) |
| **Layer B3** | PE 1 (40%) + MB5568 (60%) | PE 1 (40%) + MB5568 (60%) | FK2715 (80%) + FT5230 (20%) |
| **Layer B2** | PE 1 | PE 1 | FB5600 |
| **Layer B1** | PE 1 (40%) + MB5568 (60%) | PE 1 (40%) + MB5568 (60%) | FK2715 (80%) + FT5230 (20%) |
| **Layer A** | FK2715 | MB5568 | FK2715 (80%) + FT5230 (20%) |
| **Draw Ratio** | 6.0 | 6.0 | - |
| **Final Total Thickness /µm** | 25 | 25 | 35 |
| **Surface Tension Dyne/cm** | 48 | 48 | 48 |

Measurement Methods

The **surface tension** was measured according to ASTM D-2578.

**Metal adhesion** has been measured using the following tape test: A sample of the metallized film is placed on a smooth, flat surface, with the metallized layer A facing up. Subsequently, 6 in (15.24 cm) of Scotch™ 610 adhesive tape is applied to the surface and smoothed with the thumb and forefinger to ensure good contact. To facilitate separation, one end of the tape should be doubled over. Then, while holding the film with one hand, the other hand peels the tape back approximately 180° in one smooth movement. The test film is afterwards examined for metal removal, and the used tape for metal transfer, using a strong backlight.

The metal adhesion was measured according to the "tape test" procedure described above 46 days after metallization was done. Table 3 provides explanations on the ranking, which is done visually, *i.e.* based on the observations.

**Table 3**: Metal adhesion ranking scheme.

| Maximum dimensions of delaminated metal surface | Number of delaminated areas | Ranking | Evaluation | QC passed |
|---|---|---|---|---|
| 0.1 mm | Zero<br>Less than 10 points | 5<br>4 | Very good<br>Good | Yes<br>Yes |
| 0.1 mm<br>0.1 mm<br>0.2 mm<br>> 0.2 mm | Less than 50 points<br>More than 100 points<br>Less than 100 points | 3<br>1<br>2<br>1 | Limit<br>Bad<br>Limit<br>Bad | No further testing<br>No<br>No<br>No |

**Barrier Properties**

**Water vapor transmission rates** (WVTR) were determined under tropical conditions (38 °C; 90 % RH)

according to ISO 15106-2.

**Mechanical Properties**

**TM/TD** (transversal direction) and **TM/MD** (machine direction) were determined according to ISO 527-3 at room temperature on films with a thickness of 25 μm (CE1 and IE1) or 35 (CE2) at a cross head speed of 1 mm/min and before metallization.

**TS/TD** (transversal direction), **TS/MD** (machine direction), were determined according to ISO 527-3 at room temperature on films with a thickness of 25 μm (CE1 and IE1) or 35 (CE2) at a cross head speed of 200 mm/min and before metallization.

**Table 4:** Overview over measurement results.

| | Unit | **IE1** | **CE1** | **CE2** |
|---|---|---|---|---|
| **Metal adhesion** | | 4/5 | 3/5 | 4/5 |
| **TM/MD** | MPa | 1533 | 1266 | 629 |
| **TS/MD** | MPa | 216.8 | 159.5 | 43.2 |
| **TM/TD** | MPa | 1827 | 1881 | 834 |
| **TS/TD** | MPa | 32.8 | 32.9 | 38.1 |
| **WVTR** | $g/m^2 \cdot d$ | 0.55 | n.d. | 0.62 |
| n.d. = not determined | | | | |

The measurement results in table 4 prove that the barrier film with the inventive polyethylene film (IE1) has the best combination of metal adhesion, mechanical properties and water vapor transmission rate. On a scale reaching from 1 to 5, the film IE1, having FK2715 in layer A, has an adhesion strength of 4, whereas CE1, having MB5568 in layer A, only achieves a score of 3 (but otherwise acceptable mechanical properties). The adhesion strength of CE2 is comparable to the adhesion strength of IE1. Yet, CE2 is inferior in the water vapor transmission rate and has clearly insufficient mechanical properties.

The adhesion strength between the metal layer and layer A of the layered polyethylene film is important, since the metal layer will be laminated to other films when used for packaging. If adhesion between layer A and the metal layer is weak this also results in overall poor adhesion strength in the packaging, leading to the problem of delamination and insufficient performance.

## Claims

**1.** A layered polyethylene film comprising a layer A and at least one layer B,

wherein layer A comprises, based on the total weight of layer A, more than 90 wt.-% of an ethylene copolymer having:

- a density of from 910 to 945 kg/m$^3$, determined according to ISO 1183-1:2004 (method A); and
- a Mw/Mn, determined by means of Gel Permeation Chromatography according to ISO 16014-1:2003, of from 2.0 to 8.0,

and wherein the layered polyethylene film is a machine oriented film.

**2.** The layered polyethylene film according to claim 1, wherein the ethylene copolymer is a copolymer of ethylene with at least two different comonomers selected from the group of $C_4$-$C_{10}$ alpha-olefin comonomers, preferably selected from the group of $C_4$-$C_8$ alpha-olefin comonomers, more preferably selected from the group of $C_4$-$C_6$ alpha-olefin comonomers.

**3.** The layered polyethylene film according to one of claims 1 or 2, wherein the ethylene copolymer is a multimodal ethylene copolymer, preferably a bimodal ethylene terpolymer.

4. The layered polyethylene film according to one of the preceding claims, wherein the ethylene copolymer is:

- a catalytically produced ethylene copolymer, preferably an ethylene copolymer produced by a metallocene catalyst, and/or
- obtained in a process comprising two polymerization steps, wherein the first polymerization step is preferably conducted as a slurry polymerization, more preferably as a slurry polymerization in a loop reactor, and wherein the second polymerization step is conducted in gas phase.

5. The layered polyethylene film according to one of the preceding claims, wherein the ethylene copolymer has

- a $MFR_2$ (2.16 kg, 190 °C) of 0.1 to 3.0 g/10 min, preferably of 0.3 to 2.0 g/10 min, more preferably of 0.75 to 1.75 g/10 min, measured according to ISO1133-1; and/or
- a $MFR_5$ (5 kg, 190 °C) of 0.1 to 5.0 g/10 min, preferably of 0.5 to 2.5 g/10 min, more preferably of 0.8 to 2.0 g/10 min, measured according to ISO1133-1; and/or
- a $MFR_{21}$ (21.6 kg, 190°C) of 5 to 60 g/10 min, preferably of 10 to 50 g/10 min, more preferably of 15 to 35 g/10 min, measured according to ISO1133-1; and/or
- a $MFR_{21}/MFR_2$ ($FRR_{21/2}$) of 5 to 50, preferably of 10 to 40, more preferably of 15 to 25.

6. The layered polyethylene film according to one of the preceding claims, wherein the ethylene copolymer has

- a density, determined according to ISO 1183-1:2004 (method A), of from 915 to 935 kg/$m^3$, preferably of from 917 to 930 kg/$m^3$; and/or
- a Mw/Mn, determined by means of Gel Permeation Chromatography and according to ISO 16014-1:2003, of from 2.5 to 6.5, more preferably of from 3.0 to 5.0.

7. The layered polyethylene film according to one of the preceding claims, wherein layer A comprises at least 95.0 wt.-%, preferably at least 97.0 wt.-%, more preferably at least 98.0 wt.-%, of the ethylene copolymer based on the total weight of layer A.

8. The layered polyethylene film according to one of the preceding claims, wherein layer A comprises up to 2.0 wt.-%, preferably from 0.01 to 1.5 wt.-%; more preferably from 0.01 to 1.0 wt.-%, most preferably from 0.01 to 0.5 wt.-%, based on the total weight of layer A of at least one additive, wherein the additive is selected from the group consisting of antioxidants, process stabilizers, pigments, UV-stabilizers, slip agents, acid scavengers and combinations thereof.

9. The layered polyethylene film according to one of the preceding claims having:

- a tensile modulus in machine direction of more than 1000 MPa, preferably more than 1250 MPa; more preferably more than 1400 MPa and less than 2500 MPa, determined according to ISO 527-3 at room temperature on a film with a thickness of 25 μm; and/or
- a tensile modulus in transverse direction of more than 1000 MPa, preferably more than 1500 MPa, more preferably more than 1700 MPa and less than 2100 MPa, determined according to ISO 527-3 at room temperature on a film with a thickness of 25 μm; and/or
- a tensile strength in machine direction of more than 180 MPa, more preferably of more than 200 MPa and less than 250 MPa, determined according to ISO 527-3 at room temperature on a film with a thickness of 25 μm; and/or
- a tensile strength in transverse direction of more than 28 MPa, more preferably of more than 30 MPa and less than 38 MPa, determined according to ISO 527-3 at room temperature on a film with a thickness of 25 μm.

10. The layered polyethylene film according to one of the preceding claims wherein the at least one layer B comprises or consists of:

- a high-density polyethylene having a density of more than 950 kg/$m^3$ to less than 970 kg/$m^3$, determined according to ISO 1183-1:2004 (method A); and/or
- an ethylene copolymer, preferably an ethylene terpolymer, having:

a density of from 925 to 950 kg/m3, determined according to ISO 1183-1:2004 (method A); and
a Mw/Mn, determined by means of Gel Permeation Chromatography according to ISO 16014-1:2003, of from 10 to 30.

**11.** The layered polyethylene film according to one of the preceding claims wherein the film:

- is only uniaxially oriented; and /or
- has a thickness of 10 to 60 μm, preferably 20 to 40 μm; and/or
- consists of layer A and 2-10 layers B, preferably consists of layer A and 2-6 layers B, in particular consist of layer A and 4 layers B.

**12.** The layered polyethylene film according to one of the preceding claims, wherein the film is oriented in machine direction in a draw ratio of 1: 1.5 to 1:12, preferably in a draw ratio of 1:4 to 1:8.

**13.** Barrier film comprising the layered polyethylene film according to one of the preceding claims and a metal layer or barrier coat disposed on layer A, preferably an aluminum layer or a polyvinyl alcohol-based barrier coat with a thickness of from 1 to 250 nm respectively, such as 1 to 50 nm.

**14.** A process for forming a barrier film comprising the layered polyethylene film according to one of the preceding claims, wherein layer A is surface treated, preferably by plasma discharge, more preferably by a low temperature corona discharge plasma, and wherein the surface treated layer A is metallized or barrier coated, wherein metallization is preferably with aluminum, in particular by physical vapor deposition and wherein barrier coating is preferably done by coating with an aqueous dispersion of a polyvinyl alcohol-based polymer.

**15.** A laminate or an article comprising the barrier film according to claim 13, preferably a laminate or an article wherein the barrier film is laminated to another layer, such as a layer of a sealing film.

Europäisches Patentamt
European Patent Office
Office européen des brevets

# EUROPEAN SEARCH REPORT

Application Number
EP 24 18 6577

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | US 2023/082689 A1 (NIEDERSÜSS PETER [AT] ET AL) 16 March 2023 (2023-03-16) * claim 1 * * paragraphs [0035] - [0047], [0100] - [0105], [0157] * | 1-12 | INV. B32B7/02 B32B7/022 B32B7/027 B32B27/08 B32B27/16 B32B27/18 B32B27/32 |
| X | EP 2 944 466 A1 (BOREALIS AG [AT]) 18 November 2015 (2015-11-18) * paragraphs [0043] - [0051], [0080] - [0092], [0144] * | 1-15 | |
| X | EP 4 046 796 A1 (ABU DHABI POLYMERS CO LTD BOROUGE LLC [AE]; BOREALIS AG [AT]) 24 August 2022 (2022-08-24) * claim 1 * * paragraphs [0015] - [0017], [0004] - [0044], [0110] - [0117] * | 1-12 | |
| X | WO 2020/068497 A1 (EXXONMOBIL CHEMICAL PATENTS INC [US]) 2 April 2020 (2020-04-02) * claims 1, 3, 4, 15, 16 * * paragraphs [0046] - [0048], [0066], [0067] * | 1-15 | |

TECHNICAL FIELDS SEARCHED (IPC)

B32B
C08F
C08J

The present search report has been drawn up for all claims

2

| Place of search | Date of completion of the search | Examiner |
|---|---|---|
| The Hague | 13 November 2024 | Nowak, René |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

# ANNEX TO THE EUROPEAN SEARCH REPORT ON EUROPEAN PATENT APPLICATION NO.

EP 24 18 6577

This annex lists the patent family members relating to the patent documents cited in the above-mentioned European search report. The members are as contained in the European Patent Office EDP file on
The European Patent Office is in no way liable for these particulars which are merely given for the purpose of information.

13-11-2024

| Patent document cited in search report | Publication date | Patent family member(s) | Publication date |
|---|---|---|---|
| US 2023082689 A1 | 16-03-2023 | CN 109070558 A | 21-12-2018 |
| | | EP 3390049 A1 | 24-10-2018 |
| | | ES 2819978 T3 | 19-04-2021 |
| | | KR 20180094974 A | 24-08-2018 |
| | | US 2018370202 A1 | 27-12-2018 |
| | | US 2023082689 A1 | 16-03-2023 |
| | | WO 2017102704 A1 | 22-06-2017 |
| EP 2944466 A1 | 18-11-2015 | CN 106414036 A | 15-02-2017 |
| | | EP 2944466 A1 | 18-11-2015 |
| | | ES 2656101 T3 | 23-02-2018 |
| | | WO 2015173199 A1 | 19-11-2015 |
| EP 4046796 A1 | 24-08-2022 | CN 117177865 A | 05-12-2023 |
| | | EP 4046796 A1 | 24-08-2022 |
| | | IL 305305 A | 01-10-2023 |
| | | TW 202237411 A | 01-10-2022 |
| | | WO 2022175326 A1 | 25-08-2022 |
| WO 2020068497 A1 | 02-04-2020 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2017102704 A1
- WO 2022184598 A1
- WO 2014209411 A1
- WO 2020155795 A1
- WO 2014160571 A1
- US 20170232706 A1
- WO 9512622 A
- WO 9632423 A
- WO 9728170 A
- WO 9832776 A
- WO 9961489 A
- WO 03010208 A
- WO 03051934 A
- WO 03051514 A
- WO 2004085499 A
- EP 1752462 A
- EP 1739103 A
- WO 2016083208 A1
- WO 2023280799 A1


### Non-patent literature cited in the description


- **KLIMKE, K.** ; **PARKINSON, M.** ; **PIEL, C.** ; **KAMINSKY, W** ; **SPIESS, H.W** ; **WILHELM, M.** *Macromol. Chem. Phys*, 2006, vol. 207, 382
- **PARKINSON, M** ; **KLIMKE, K.** ; **SPIESS, H.W** ; **WILHELM, M.** *Macromol. Chem. Phys.*, 2007, vol. 208, 2128
- **POLLARD, M.** ; **KLIMKE, K.** ; **GRAF, R** ; **SPIESS, H.W** ; **WILHELM, M.** ; **SPERBER, O** ; **PIEL, C.** ; **KAMINSKY, W**. *Macromolecules*, 2004, vol. 37, 813
- **FILIP, X** ; **TRIPON, C.** ; **FILIP, C**. *J. Mag. Resn.*, 2005, vol. 176, 239
- **GRIFFIN, J.M.** ; **TRIPON, C.** ; **SAMOSON, A** ; **FILIP, C** ; **BROWN, S.P.** *Mag. Res. in Chem*, 2007, vol. 45 (S1), S198
- **CASTIGNOLLES, P.** ; **GRAF, R** ; **PARKINSON, M** ; **WILHELM, M** ; **GABORIEAU, M.** *Polymer*, 2009, vol. 50, 2373
- **BUSICO, V.** ; **CIPULLO, R.** *Prog. Polym. Sci.*, 2001, vol. 26, 443